Europäisches Patentamt

European Patent Office

Office européen des brevets

(19)

(11) Veröffentlichungsnummer: **0 299 324 B1**

(12) **EUROPÄISCHE PATENTSCHRIFT**

(45) Veröffentlichungstag der Patentschrift: **21.11.91**

(51) Int. Cl.5: **F16L 23/00**

(21) Anmeldenummer: **88110663.7**

(22) Anmeldetag: **04.07.88**

(54) **Fernbedient lösbare Rohrverbindung und Kombinationswerkzeug dafür.**

(30) Priorität: **15.07.87 DE 3723386**

(43) Veröffentlichungstag der Anmeldung:
**18.01.89 Patentblatt 89/03**

(45) Bekanntmachung des Hinweises auf die
Patenterteilung:
**21.11.91 Patentblatt 91/47**

(84) Benannte Vertragsstaaten:
**BE DE FR GB**

(56) Entgegenhaltungen:
**EP-A- 0 116 488      EP-A- 0 208 969
DE-A- 2 258 858      DE-A- 3 223 427
DE-A- 3 431 325      DE-C- 1 252 483**

(73) Patentinhaber: **Deutsche Gesellschaft für Wiederaufarbeitung von Kernbrennstoffen mbH
Hamburger Allee 4 Postfach 1407
W-3000 Hannover 1(DE)**

(72) Erfinder: **Schabert, Hans-Peter, Dipl.-Ing.
Friedrich-Bauer-Strasse 28
W-8520 Erlangen(DE)**
Erfinder: **Strickroth, Erich
Zeidelweide 8B
W-8520 Buckenhof(DE)**
Erfinder: **Laurer, Erwin, Dipl.-Ing. (FH)
Frankenstrasse 5
W-8521 Möhrendorf(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine fernbedient lösbare Rohrverbindung, insbesondere für kerntechnische Anlagen, mit zwei Rohrenden, die jeweils einen Flansch aufweisen, mit einer Zentrierhilfe, die mit den beiden Flanschen zusammenwirkt, mit einer Dichtung und mit einer Befestigungsschraube zum Zusammenpressen der beiden Flansche.

Rohrverbindungen der obengenannten Art sind z.B. aus den deutschen Offenlegungsschriften 32 23 427, 33 40 465 und 34 31 325 bekannt. Sie sind dort für eine kerntechnische Anlage, nämlich zur Wiederaufarbeitung von abgebrannten Kernbrennstoffen vorgesehen. Weiterhin ist aus der deutschen Offenlegungsschrift 2 258 858 eine Befestigungsschraube zu entnehmen, die unterschiedliche Gewindebereiche mit gleicher Steigung aufweist. Ein konischer, in ein zylindrisches Gewinde übergehender Gewindebereich erleichtert das verkantungsfreie Aufschrauben einer Mutter und ermöglicht den Einsatz fernbedienbarer Elemente für den Aufschraubvorgang.

Eine Vorrichtung zum Ein- und Ausschrauben von Stiftschrauben und zum Drehen der entsprechenden Stiftschraubenmuttern für die Deckelbefestigung eines nuklearen Reaktorbehälters ist aus der EP-A-0116488 bekannt. Daraus entnehmbar ist die entsprechend ihrer Aufgabenstellung getrennte Anordnung von Drehwerken für das Ein- und Ausschrauben der Stiftschraube und das Drehen der Stiftschraubenmutter.

Die Erfindung hat eine Verbesserung der bekannten Verbindungen zum Ziel, mit der eine Vereinfachung der Teile und damit eine leichtere Bedienbarkeit erreicht werden soll. Dies ist besonders wichtig für kerntechnische Anlagen der vorgenannten Art, bei denen die Zugänglichkeit nicht nur im Normalbetrieb sondern vor allem auch für Reparaturzwecke eingeschränkt ist.

Erfindungsgemäß ist vorgesehen, daß die Befestigungsschraube zwei Gewindebereiche hat, die beim Zusammenpressen nacheinander wirksam werden, wobei der erste Gewindebereich eine wesentlich größere Steigung als der zweite Gewindebereich hat.

Bei der Erfindung ist die zum Schließen der Rohrverbindung notwendige Bewegung in zwei Abschnitte unterteilt. Von diesen wird der erste Abschnitt mit Hilfe der Schraube schnell zurückgelegt, weil dabei ein Gewinde mit großer Steigung benutzt wird. Am Ende dieses Abschnitts ist die Schraube im Gegenflansch verankert, aber noch nicht auf eine wesentliche Spannkraft angezogen. Danach wird mit dem Gewindebereich mit kleinerer Steigung die gewünschte große Spannkraft erzeugt, die zum Abdichten und zur Übertragung von Rohrleitungs-Biegemomenten benötigt wird. Dies geschieht auf einem kürzeren Weg und aufgrund der kleineren Steigung mit entsprechend kleinem Drehmoment. Da beide Abschnitte der zum Schließen der Verbindung erforderlichen Bewegung mit Hilfe einer einzigen Befestigungsschraube zurückgelegt werden, ist es nicht nötig, mehre Teile fernbedient einander zu zentrieren. Mit dem "steileren" Gewinde wird außerdem ein Fressen in dem Muttergewinde des festen Flansches ausgeschlossen, so daß dieses nicht austauschbar sein muß. Dies spart erheblich an Platz.

Das erste Gewinde kann vorteilhaft ein Grobgewinde mit mindestens der doppelten Steigung wie das zweite Gewinde der Befestigungsschraube sein, das im folgenden als Feingewinde bezeichnet wird. Die beiden Gewinde können ferner entgegengesetzte Steigungsrichtungen haben, damit ein unerwünschtes Mitdrehen vermieden ist. Da das Grobgewinde zum Halten dient, während mit dem Feingewinde die Verbindung gespannt wird, können mit ferritischem Schraubenstahl beispielsweise 200 kN Schraubenkraft aufgebracht werden.

Das Grobgewinde kann ein axiales Gewindespiel zum Gegenflansch von mindestens 0,5 mm haben. Vorzugsweise ist es wesentlich größer, nämlich 2 mm oder mehr. Mit diesem Gewindespiel erreicht man, daß das Einfädeln der Befestigungsschraube erleichtert ist und deshalb auch durch Fernbedienung erfolgen kann, bei der die Befestigungsschraube nicht ganz genau zentriert werden kann. Darüber hinaus garantiert ein so großes Spiel auch für den Fall, daß durch Kaltverschweißen ein Materialauftrag entsteht, noch immer genügend Freigängigkeit zwischen Schrauben- und Mutterngewinde.

Das Grobgewinde kann gerollt sein. Damit ist gemeint, daß keine aufwendig genaue spanabhebende Bearbeitung notwendig ist. Außerdem neigen gerollte Gewinde weniger zum Fressen.

Der Schaftteil zwischen den beiden Gewinden kann vorteilhaft als Dehnschaft ausgebildet sein. Er ist also mit geringerem Schaftdurchmesser ausgeführt und nimmt beim Spannen der Schraubverbindung durch elastische Federung Setzungen auf. Auf einem Teilbereich nahe dem Feingewinde kann der Dehnschaft mit einer Verdickung versehen sein, mit der die Schraube im Flansch zentriert ist. Dies erleichtert die Führung beim Schließen der Schraubverbindung. Ferner kann man mit der Verdickung ein seitliches Auswandern der Schraube unter der Wirkung unsymmetrischer Reibkräfte in der Mutter vermeiden.

Eine besonders vorteilhafte Ausführungsform der Erfindung besteht darin, daß das erste Gewinde in eine Gewindebohrung in dem einen Flansch und das zweite Gewinde in eine Gewindebohrung einer Hülse eingreift, die sich an dem anderen Flansch abstützt. Die Hülse ist zweckmäßig unverlierbar an der Befestigungsschraube angebracht. Zu diesem Zweck kann z.B. vorgesehen sein, daß die Schraubbewegung der Hülse auf dem Feingewinde in der Richtung weg vom Grobgewinde durch einen festen Anschlag (Bund) begrenzt ist. Der Bund sichert auch eine eindeutige Ausgangslage vor dem Beginn des Spannvorganges und ermöglicht ein volles Einschrauben des Grobgewindes.

Eine weitere Möglichkeit besteht darin, daß die Hülse ein doppeltes Innengewinde hat, das sowohl über das Feingewinde als auch über das Grobgewinde geschraubt werden kann. Das Doppelgewinde ermöglicht einen kleineren Durchmesser des Feingewindes. Im Sonderfall haben beide Gewinde den gleichen nominalen Außendurchmesser. Die Hülse wird daher über das Grobgewinde gedreht, obwohl ihr Innendurchmesser kleiner ist als der Außendurchmesser des Grobgewindes. Das Grobgewinde bildet im Feingewinde grobe Quernuten, die vorteilhaft Schmierstoffe, Schmutz und Späne aufnehmen können und seine Freßneigung herabsetzen.

Die Hülse und die Schraube können Flachkanten unterschiedlicher Abmessungen zum Ansetzen von Werkzeugen aufweisen. Zum Beispiel kann die Kantenzahl der Hülse größer als die Kantenzahl der Schraube sein. Vorteilhaft ist dabei insbesondere die Form, daß die Hülse einen Sechskant, die Schraube dagegen einen Vierkant aufweist. Ein Vierkant ermöglicht nämlich gegenüber einem Sechskant ein größeres Drehwinkel- und Radialspiel zwischen Flachkant und Werkzeug, das für das Aufstecken auf eine schräg stehende Schraube vorteilhaft ist. Dies ist von Vorteil, weil als erstes die noch lose Schraube mit ihrem Grobgewinde eingeordnet werden muß. Sitzt sie in ihrer richtigen Lage, kann das Werkzeug für die Hülsenmutter mit geringerem Spiel aufgeschoben werden. Es ist ebenso möglich, die Hülse mit einem Vierkant, die Schraube dagegen mit einem Dreikant zu versehen.

Unabhängig von der Kantenzahl sollte der Flachkant der Schraube eine Schlüsselweite haben, die um mindestens 2 mm größer ist als der Durchmesser des Dehnschaftes. In seinem Zentrum sollte eine Sacklochbohrung vorgesehen sein. An dieser kann eine Bohrmaschine zentriert werden, die dann am Flachkant festgeklemmt wird und zum Abbohren des Dehnschaftes dient, wenn das Grobgewinde festsitzt.

In dem lösbaren der beiden Flansche der Rohrverbindung kann eine kurze Länge mit einem groben Innengewinde versehen sein, das die Schraube am Herausfallen beim Transport des Flansches hindert. Danach ist die Schraube samt der Hülse auch durch Fernbedienung leicht zu entnehmen, so daß z.B. schwergängige Schrauben ohne Abbau des Flansches gewechselt werden können. Bei Wartungen können die Flansche auf diese Weise routinemäßig mit überholten, neugeschmierten Schrauben und Hülsen versehen werden. Es sind aber auch andere Möglichkeiten denkbar, um die Befestigungsschraube in dem lösbaren Flansch festzulegen. Zum Beispiel kann man so vorgehen, daß der lösbare der beiden Flansche einen Innenbund aufweist, gegen den ein geschlitzter Ring mit Keilquerschnitt als Rückanschlag für die Befestigungsschraube wirkt.

Eine andere vorteilhafte Weiterbildung der Rohrverbindung nach der Erfindung besteht darin, daß mindestens einer der Flansche mit Vorsprüngen am Rand versehen ist, über die eine die notwendige Dichtkraft überschießende Schraubenvorspannkraft übertragen wird. Hiermit ist sichergestellt, daß die gewünschte Dichtkraft der Verbindung nicht wesentlich überschritten wird, gleichzeitig aber die Flansche eine starre Relativlage zueinander haben. Dann können sich die Flansche nicht wesentlich gegeneinander bewegen, so daß die Dichtung in Ruhe bleibt.

Die Dichtung ist bei der erfindungsgemäßen Rohrverbindung vorteilhaft ein Rohrstück mit gewölbten Dichtungsflächen, das einen Radialversatz ausgleicht. Vorzugsweise ist die Dichtung eine Doppelkonusdichtung aus Metall mit einem bevorzugten Konuswinkel zwischen 35 und 60°. Die Dichtung sollte aus einem mit den Rohren artgleichen Stahl bestehen, vorzugsweise aus Austenit, weil dies für die Korrosionsbelastung günstig ist und außerdem plastische Verformungen zum Ausgleich von Ungenauigkeit mit geringen Kräften ermöglicht. Sie kann mit einem Sicherungsring an einem der Flansche festgelegt sein. Die Dichtung kann ferner in einem Flansch versenkt angeordnet sein, womit Beschädigungen der Dichtung beim Transport der Rohrstücke vermieden werden können.

An dem ortsfesten Rohrende kann eine vorspringende Dichtpartie vorgesehen sein. Dies ergibt den Vorteil, daß auch durch Fernbedienung eine Nacharbeitung, z.B. durch einen Schweißautomaten oder eine Reinigung möglich ist. Die Dichtpartie kann zugleich zur Zentrierung dienen. Außerdem kann sie in Form eines auswechselbaren Ringes oder einer auswechselbaren Buchse ausgebildet sein, um bei Beschädigungen eine schnelle Abhilfe zu ermöglichen.

Die Rohrverbindung nach der Erfindung läßt sich vorteilhaft auch so anwenden, daß die Rohrverbindung auf jeder der beiden Seiten einer Armatur vorgesehen ist, wobei eine Pendelaufhängung oberhalb der Rohrverbindung angreift. Mit solchen Rohrverbindungen sind die Armaturen leicht auswechselbar angebracht. Sie können mit einer gemeinsamen zwischen den beiden Rohrverbindungen angeordneten Schraube befestigt sein, so daß sich eine besonders einfache Anbringung ermöglicht. Die Pendelbewegung sorgt außerdem für eine günstige Vorzentrierung.

Wegen der mit der Erfindung erreichbaren großen Befestigungskraft ist es auch möglich, daß mehrere, insbesondere drei oder vier Rohrverbindungen mit einem gemeinsamen Flansch versehen sind und daß die Schraube zwischen den Rohrachsen angeordnet ist. Dabei kann die Schraube so sitzen, daß an den einzelnen Rohrverbindungen möglichst gleiche Kräfte auftreten.

Die große Befestigungskraft der Schraube bei der Rohrverbindung nach der Erfindung macht es auch möglich, daß bei einem einzelnen Rohr die Schraube asymmetrisch zur Rohrachse angeordnet ist. Dies ist ein wesentlicher Vorteil gegenüber den bekannten Rohrverbindungen, bei denen mehrere Schrauben für ein Rohr vorgesehen sind. Dabei kann auch vorteilhaft ein Flansch mit verringerter Breite, z.B. ein Rechteckflansch, in Richtung quer zur Ebene eines abgehenden Rohrbogens vorgesehen werden, der als Jumper bezeichnet ist. Mit dieser Form wird ausgenutzt, daß die normalerweise vertikal verlaufenden Rohre temperaturbedingte Biegemomente vor allem in einer vertikalen Ebene ausüben, so daß quer dazu Abflachungen des Flansches keine Festigkeitseinbuße ergeben.

Die von einem Mehrfachflansch abgehenden Rohre können vorteilhaft in einer Ebene zusammengeführt und mit einer gemeinsamen Anhängelasche verbunden sein. Dies gilt für zwei, drei oder mehr Rohre. Damit wird ein gemeinsamer Ausbau ohne Demontage benachbarter Rohre möglich.

Zur Erhöhung der Betriebssicherheit ist es vorteilhaft, wenn die Schraube aus einem anderen Werkstofftyp als der Flansch und die Hülse besteht, um ein Fressen artgleichen Materials zu vermeiden. Dabei kann die Schraube z.B. als Ferrit oder Martensit ausgebildet sein, die Flansche aus Austenit. Auf die Hülse sollte eine Freßschutzkappe aus dem Schraubenwerkstoff aufgeschrumpft sein, also ebenfalls vorzugsweise aus Ferrit oder Martensit.

Ein zum Bedienen der Rohrverbindung besonders geeignetes Kombinationswerkzeug ist mit zwei in einem gemeinsamen Gehäuse befindlichen Drehwerken und konzentrisch angeordneter Schraubenhülse und Mutterhülse zur Übertragung der jeweiligen Drehbewegung auf die Schraube und/oder Mutter so ausgebildet, daß zum Betätigen der Schraube und Hülse ein erstes Drehwerk für das Grobgewinde vorgesehen ist, das Schraube und Hülse gemeinsam dreht, und daß ein zweites Drehwerk danach allein die Hülse verdreht und sich dabei das zweite Drehwerk gegen die Schraube abstützt. Dies vermeidet auch bei großen Schraubenmomenten unzulässige Drehmomente an den Flanschen. Dabei kann mit einer Instrumentierung der Drehwerke die Umdrehungszahl oder die Laufzeit ermittelt werden, um das Kombinationswerkzeug nach dem Schließen oder Öffnen der Rohrverbindung außer Betrieb zu setzen. Ferner kann das Drehmoment ermittelt werden, vorzugsweise durch die Messung der Wirkleistung bei einem Drehstrom-Asynchronmotor. Damit wird es möglich, schwergängige Schrauben sofort zu erkennen und sie zu ersetzen, bevor ein Fressen auftritt.

In dem ersten Drehwerk kann noch ein Schlagschraubereffekt vorgesehen sein, der bei der Bewegung in Richtung Lösen des Grobgewindes wirksam wird, und zwar vorteilhaft nur bei Überschreiben eines einstellbaren Normaldrehmomentes. Damit wird auch das Lösen festgefressener Grobgewinde möglich.

Das mögliche Drehmoment des Kombinationswerkzeuges kann vor allem durch Strombegrenzung im Asynchronmotor abgestuft einstellbar sein. Niedrige Drehmomente sind z.B. wünschenswert beim Aufnehmen der Befestigungsschraube und beim Einfädeln in das Grobgewinde. Ebenso kann die Drehzahl der Drehwerke einstellbar gemacht werden, um z.B. beim Zentrieren eine möglichst kleine Relativgeschwindigkeit zu haben oder bei kleinen Schrauben mit geringen Drehmomenten einen schnelleren Betrieb zu erreichen als bei großen Schrauben, die mit entsprechend großen Kräften betätigt werden müssen. Dabei kann noch eine programmierte Schrittfolgesteuerung vorgesehen sein, die beim vorzeitigen Ansteigen eines Drehmomentes die Drehwerke stillsetzt und ein Signal gibt. Damit wird angezeigt, daß eine Störung an der Befestigungsschraube vorliegt, die besondere Maßnahmen erfordert.

Um die Drehwerke für die beiden Gewindebereiche gezielt unterschiedlich einsetzen zu können, kann man so vorgehen, daß ein Schlüssel (6-Kant-Nuß) für die Hülse relativ zum Schlüssel (4-Kant-Nuß) für die Schraube axial verstellbar ist. Zurückgezogen soll die 6-Kant-Nuß als Trichter wirken und das Einfädeln des Schraubenvierkants erleichtern. Bei eingedrehtem Grobgewinde kann dann auch die mit geringerem Spiel versehene 6-Kant-Nuß, vorzugsweise bei verringerter Drehzahl und mit geringem Drehmoment in Gegenrichtung, über die Hülse vorgefahren werden. Nach dem Aufstecken wird die Hülse dann mit großem Drehmoment in Vorwärtsrichtung gespannt.

Zur näheren Erläuterung der Erfindung werden anhand der Zeichnung Ausführungsbeispiele beschrieben. Es zeigen

die Figuren 1 bis 3 eine Rohrverbindung nach der Erfindung mit einem Rohr mit Nennweite 65 (DN 65),

die Figuren 4 und 5 eine Rohrverbindung für vier Rohre, die die eine Nennweite von 25 mm haben (DN 25),

die Figuren 6 und 7 in zwei zueinander senkrechten Ansichten eine erfindungsgemäße Befestigungsschraube,

die Figuren 8 und 9 eine der Schraube zugeordnete Hülse,

die Figuren 10 und 11 in größerem Maßstab Einzelheiten des Gewindes der Schraube und der Hülse mit den zugehörigen Muttergewinden,

die FIG 12 die Befestigung einer Dichtung,

die Figuren 13 und 14 eine Ausführungsform in zwei zueinander senkrechten Ansichten, bei der zwischen zwei Rohrverbindungen eine Armatur angeordnet ist,

die Figuren 15, 16, 17 und 18 in Ansichten zum Teil im Schnitt ein Kombinationswerkzeug zur Benutzung bei der erfindungsgemäßen Rohrverbindung.

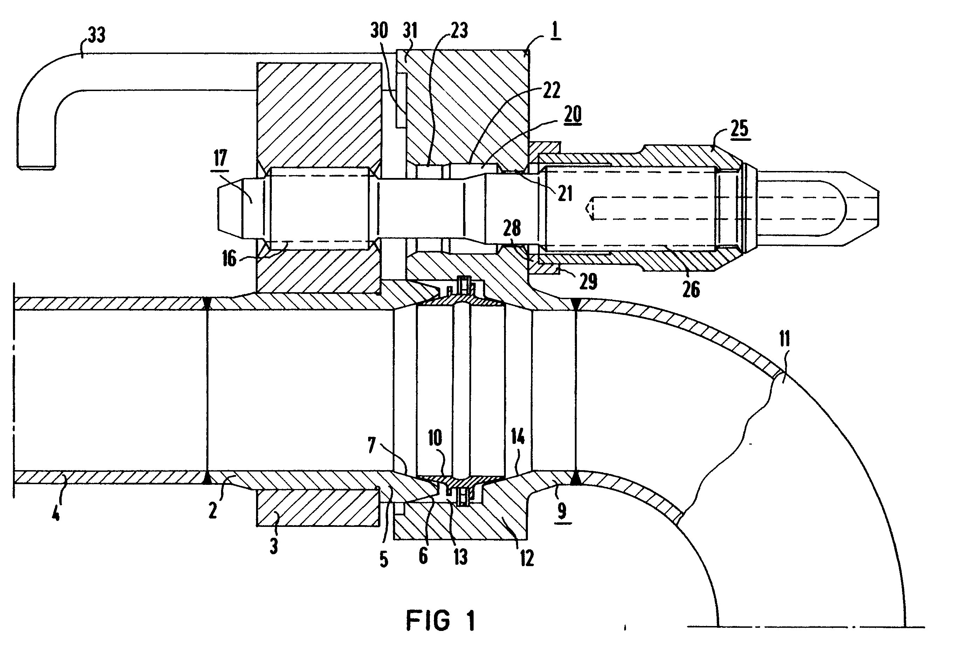

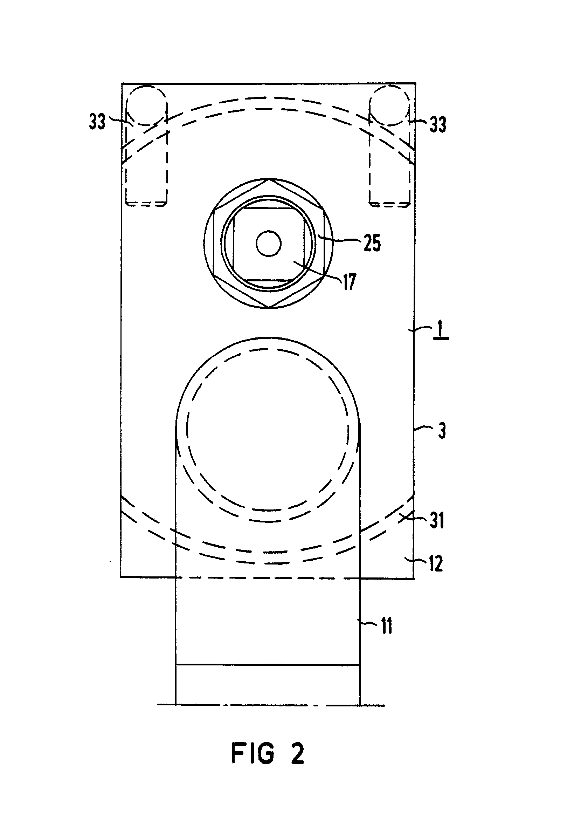

Die Rohrverbindung 1 nach den Figuren 1, 2 und 3 umfaßt ein festes Rohrende 2, das in einem an den Seiten, wie FIG 2 zeigt, geradlinig abgeflachten Festflansch 3 sitzt. Das Rohrende 2 ist auf der der Rohrverbindung 1 abgekehrten Seite an ein Rohr 4 angeschweißt. Auf der anderen Seite des Flansches 3 erweitert sich das Rohrende 2 zu einem Bund 5, der am Flansch 3 abgestützt ist. Der Bund 5 ist an seinem freien Ende außen und innen konisch zugespitzt, so daß Konusflächen 6 und 7 gebildet werden. Der Konuswinkel beträgt jeweils etwa 30°. Die äußere Konusfläche 6 dient zur Führung des Gegenstückes 9 beim Schließen der Rohrverbindung, während die innere Konusfläche 7 als Anlage für einen Dichtungskörper 10 ausgebildet ist.

Das Gegenstück 9 ist ein Krümmer, der mit dem Flansch 12 als das andere Rohrende 11 verschweißt ist. Der Flansch 12 greift mit einer zylindrischen Ausnehmung 13 über den Bund 5.

Die zylindrische Ausnehmung 13 verjüngt sich auf der dem Flansch 3 abgekehrten Seite zu einem konischen Bereich 14, der wie der konische Bereich 7 einen Winkel von 30° aufweist und ein zweites Widerlager für den Dichtungskörper 10 bildet.

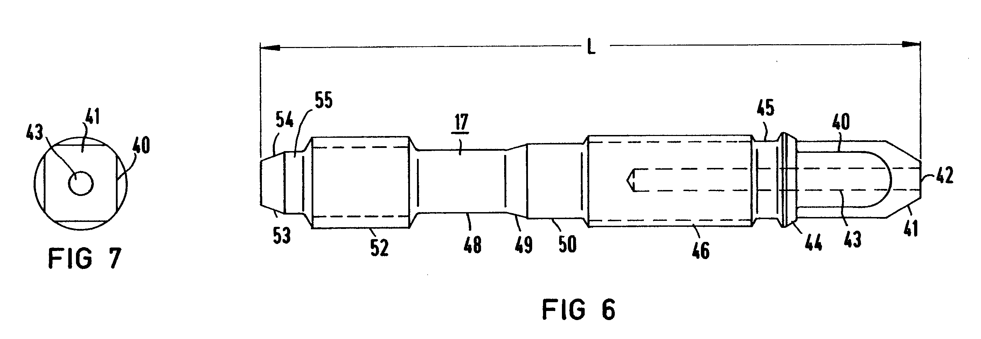

Oberhalb des Rohrendes 2 ist in dem Flansch 3 eine Gewindebohrung 16 mit einem Grobgewinde vorgesehen, in das eine Schraube 17 greift, die später anhand der Figuren 6 und 7 näher beschrieben wird. Die Schraube 17 erstreckt sich auch durch eine Bohrung 20 im Flansch 12, die mehrere Abschnitte aufweist. Ein erster Abschnitt 21, dessen Länge in Richtung der Flanschdicke von 50 mm nur etwa ein Viertel beträgt, ist als Grobgewinde wie das Gewinde 16 ausgeführt. Daran schließt sich ein zylindrischer Bereich 22 an, dessen Länge etwa die Hälfte der Flanschdicke beträgt. Der letzte Bereich 23 ist ebenfalls zylindrisch mit einem etwas kleineren Durchmesser. Zwischen den Abschnitten 21, 22 und 23, insbesondere an den Außenseiten des Flansches 12, sind Abschrägungen mit 45° oder weniger vorgesehen.

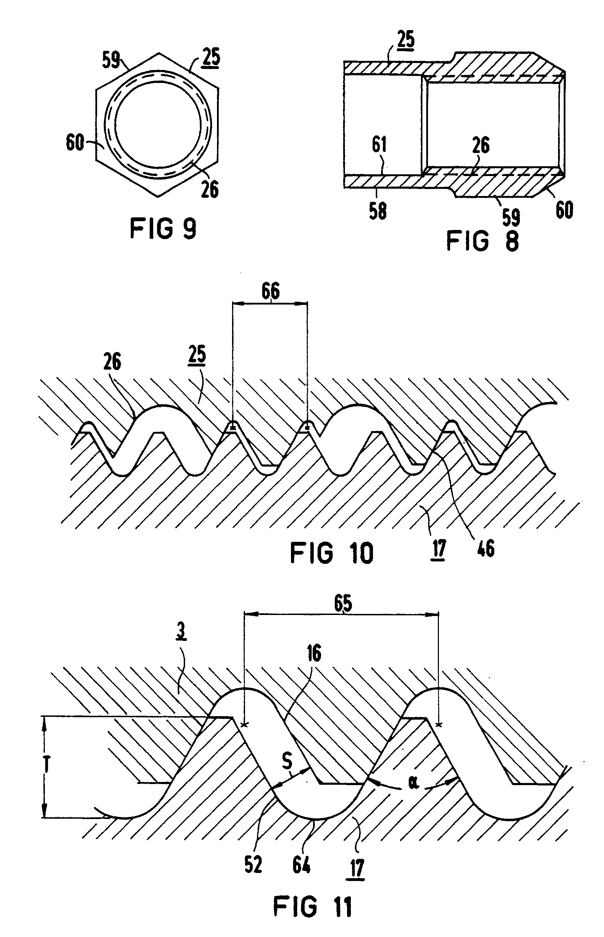

Auf der Schraube 17 sitzt eine Spannhülse 25, die eine Gewindebohrung 26 aufweist. Das Gewinde ist sowohl als Feingewinde wie auch als Grobgewinde ausgebildet, wie später anhand der Figuren 10 näher erläutert wird. Die Hülse 25 stützt sich über einen Teller 28 mit einem hochgezogenen Rand 29 an der dem Flansch 3 abgekehrten Seite des Flansches 12 ab.

Die dem Flansch 3 zugekehrte Seite 30 des Flansches 12 hat am Rand einen als Distanzstück 31 wirkenden Bund. Außerdem sind in die obere Seite des Flansches 12 zwei Haken 33 eingepreßt, die sich, wie die FIG 2 zeigt, auf die obere Rundung des Flansches 3 legen können. Mit den Haken 33 wird der lose Flansch 12 an dem Festflansch 3 so abgestützt und zentriert, daß die Schraube 17 in die Gewindebohrung 16 eingeschraubt werden kann.

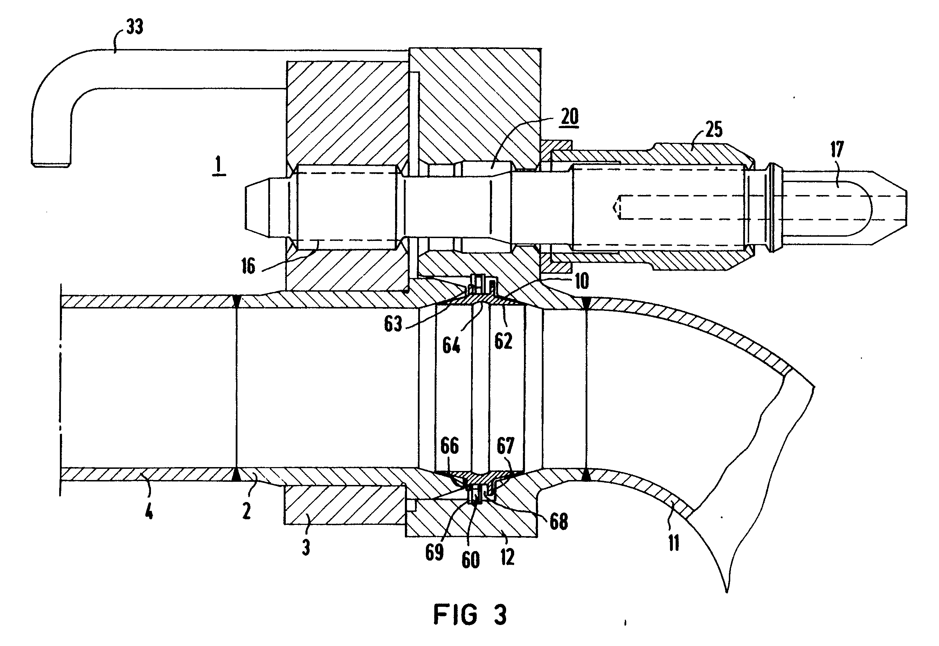

Wenn die Schraube 17 vollständig eingeschraubt ist, hat die Rohrverbindung 1 die in der FIG 1 dargestellte Lage. Danach wird die Hülse 25 mit dem Gewinde 26 angezogen, bis der Bund 31 an dem Flansch 3 anliegt. Die Rohrverbindung 1 nimmt dann die in FIG 3 dargestellte Betriebsstellung ein. In dieser Lage ist der Dichtkörper 10 so verformt, daß die Dichtheit der Rohrverbindung 1 gewährleistet ist, und das Distanzstück 31 liegt fest auf dem Gegenflansch 3 an. Weiteres Drehen an der Hülse 25 führt dann zu einem erheblichen Ansteigen des dafür erforderlichen Drehmoments, so daß die Beendigung der Schließbewegung gut zu erfassen ist.

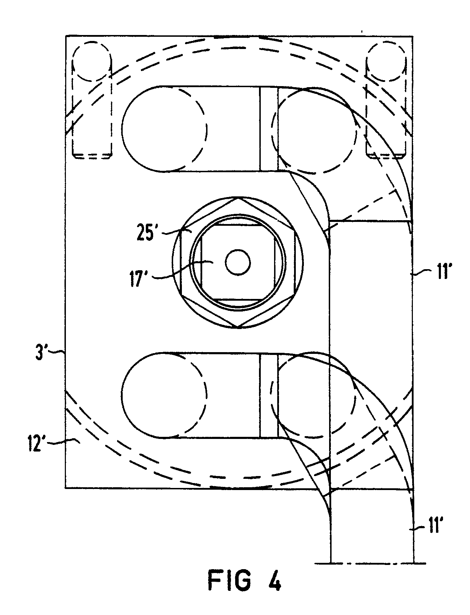

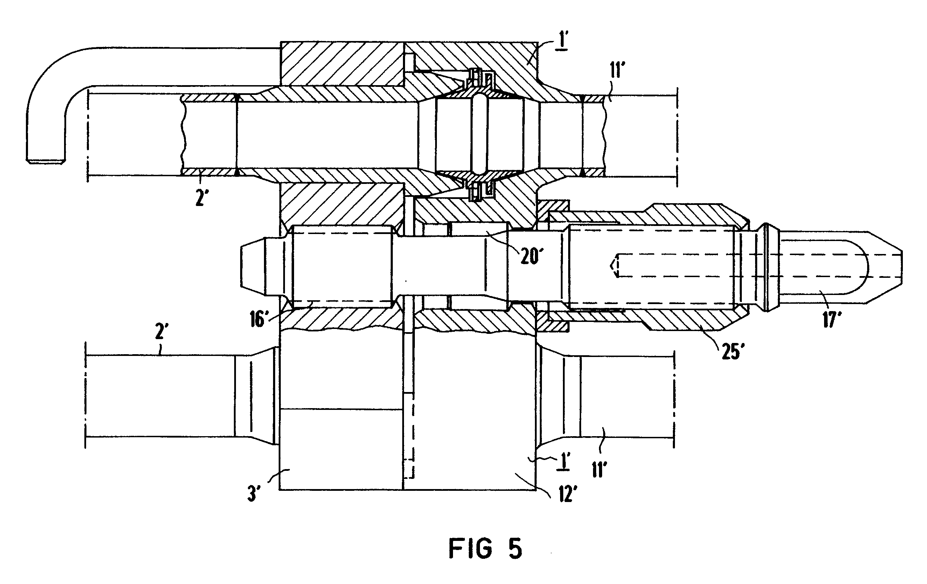

Bei den Rohrverbindungen 1′ nach den Figuren 4 und 5 sind mit dem Festflansch 3′ ebenso wie mit dem losen Flansch 12′ je vier Rohrenden 2′ und vier Rohrenden 11′ verbunden. Die Rohrverbindungen 1′ sind im einzelnen praktisch so ausgebildet wie die zwischen den Rohrenden 2 und 11 nach den Figuren 1 bis 3, jedoch ist der Rohrdurchmesser wesentlich kleiner, nämlich 25 mm, so daß für die vier Dichtungsstellen mit einer Schraube 17′ und einer Hülse 25′ genügend Kraft zur Abdichtung aufgebracht werden kann. Beachtlich ist, daß die vier Rohrenden 11′ des losen Flansches 12′ alle zu einer, nämlich der rechten Seite der Schraube 17′ geführt sind. Dort verlaufen sie raumsparend in einer Ebene rechtwinklig zur Bildebene der FIG 4.

Die in FIG 6 maßstäblich dargestellte Schraube 17 hat eine Länge L von 270 mm. Sie besitzt am rechten Ende einen Vierkantkopf 40, der eine Schlüsselweite von 30 mm hat und mit einem Kegelstumpf 41 zum freien Ende 42 hin ausläuft. Der Kegelwinkel beträgt 60°. Im Vierkant 40 ist eine zentrische Sackbohrung 43 vorgesehen.

An den Vierkant 40, der etwa ein Fünftel der Schraubenlänge L ausmacht, schließt sich ein auf 38 mm Durchmesser erweiterter Bund 44 an, der von zwei konischen Flächen mit 30 bzw. 60° gegenüber der Schraubenachse begrenzt wird. Der benachbarte zylindrische Abschnitt 45 hat bei etwa 10 mm Länge 30 mm Durchmesser. Er bildet einen Auslauf für ein Gewinde 46, das sowohl als Grobgewinde wie auch als Feingewinde ausgebildet ist. Das Gewinde 46 ist im einzelnen in FIG 10 in größerem Maßstab dargestellt. Die Länge des Gewindeabschnittes 46 beträgt etwa ein Viertel der Schraubenlänge L.

An die linke Seite des Gewindes 46 schließt sich ein Schraubenteil 48 an, der als Dehnschaft ausgebildet ist. Der Dehnschaft 48 hat einen Durchmesser von 25 mm und eine Länge von etwa 40 mm. Er geht mit einer Konusfläche 49, die einen Konuswinkel von 15° hat, zu einem verdickten Führungszylinder 50 mit einem Durchmesser von 30 mm über, der sich unmittelbar an das Gewinde 46 anschließt.

Ein zweiter Gewindebereich 52 der Schraube 17, der sich an den Dehnschaft 48 anschließt, besitzt ein gerolltes Grobgewinde, das in FIG 11 in größerem Maßstab dargestellt ist. Die Länge dieses Gewindebereiches 52 beträgt mit 40 mm etwa ein Siebentel der Schraubenlänge L. Das andere Ende 53 der Schraube 17 wird von einem Kegelstumpf 54 mit einem Konuswinkel von 20° gebildet, der von einem kurzen zylindrischen Abschnitt 55 mit einem Durchmesser von 24 mm ausgeht und zum Einfädeln der Schraube 17 in die Gewindebohrung 16 dient.

Die in den Figuren 8 und 9 dargestellte Spannhülse 25 besitzt einen außen zylindrischen Abschnitt 58 und einen daran anschließenden Sechskant 59, der 46 mm Schlüsselweite hat und auf der dem zylindrischen Abschnitt 58 abgekehrten Seite zu einem Kegelstumpf 60 mit einem Winkel von 30° abgeflacht ist. Im Inneren enthält die Hülse 25 über etwa 50 mm Länge im Bereich des Sechskantes 59 das Gewinde 26, das als Grob- und Feingebilde ausgebildet ist, wie in der FIG 10 näher dargestellt ist. Der restliche Abschnitt 61 der Gesamtlänge von etwa 80 mm, also eine Länge von etwa 30 mm, ist zylindrisch mit einem Innendurchmesser ausgeführt, der mit 37 mm etwas größer ist als der Außendurchmesser des Gewindes 26.

Die FIG 11 zeigt in einem zehnfach vergrößerten Maßstab das gerollte Grobgewinde 52 der Schraube 17. Es hat einen mit einem Radius von 1,9 mm gerundeten Rillengrund 64 mit einem Gewindeinnendurchmesser von 26,4 mm. Der Flankenwinkel $\alpha$ beträgt 60°. Die Tiefe T der Gewindegänge beträgt 4,1 mm. Die Steigung 65 des rechtsgängigen Gewindes 52 ist 8 mm. Die FIG 11 zeigt ferner, daß gegenüber dem Muttergewinde, wie es in den Gewindebohrungen 16 und 26 vorgesehen ist, ein erhebliches Spiel vorliegt. Das mit S bezeichnete Spiel beträgt mehr als 1 mm.

In FIG 10 ist das linksgängige Feingewinde 46 der Schraube 17 dargestellt. Seine Steigung 66 ist 3 mm. Der Innendurchmesser des Gewindes 46 beträgt 30,9 mm und die Zahnhöhe 1,85 mm. Das Feingewinde 46 greift, wie die FIG 10 zeigt, in das Gewinde 26 der Hülse 25, das sowohl dem Grobgewinde 52 als auch dem Feingewinde 46 angepaßt ist. Da das Feingewinde linksgängig geschnitten ist, das Grobgewinde 52 dagegen rechtsgängig, ergeben sich Hohlräume und Nuten im Gewindebereich, die Schmiermittel aufnehmen können, sowie Abrieb und Schmutz, der beim Betätigen der Gewinde entsteht. Damit wird die Störanfälligkeit der Gewinde herabgesetzt.

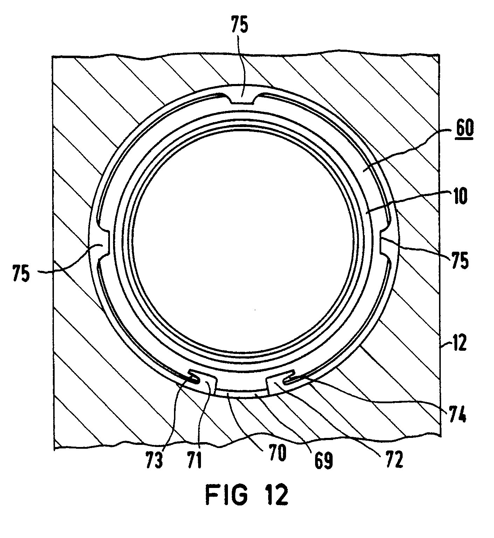

In FIG 12 ist in einem Schnitt quer zur Rohrachse der aus Federmaterial bestehende Ring 60 dargestellt, der zur Halterung des Dichtkörpers 10 dient, wie er bei der erfindungsgemäßen Rohrverbindung vorgesehen ist. In FIG 3 ist zu sehen, daß der Dichtkörper 10 in unverformten Zustand zwei annähernd zylindrische Innenwandbereiche 62 und 63 aufweist, die durch eine Rundnut 64 in der Innenwand des Dichtkörpers 10 voneinander getrennt sind. Im Bereich der Rundnut 64 sind auf der Außenseite des Dichtkörpers 10 zwei rechtwinklig zur Rohrachse um den Umfang des Dichtungskörpers 10 verlaufende Rippen 66 und 67 vorgesehen, die mit einem Abstand voneinander angeordnet sind.

In den Zwischenraum 68 zwischen den Rippen 66, 67 greift der Haltering 60, der in eine Nut 69 im Losflansch 12 eingesprengt ist. Der Ring 60 ist, wie FIG 12 zeigt, bei 70 geschlitzt. Die dem Schlitz 70 zugekehrten Enden 71 und 72 sind mit hakenförmigen Ausnehmungen 73 und 74 versehen. Deshalb kann der Ring 60 dort mit einem Zangenwerkzeug angepackt und zusammengezogen werden. Sein sich dabei verringernder Durchmesser gestattet das Ausheben aus der Nut 69. Im Normalbetrieb greift der Ring 60 dagegen mit den Verdickungen 71 und 72 sowie mit weiteren Vorsprüngen 75, die gleichmäßig um den Umfang verteilt sind, in den Zwischenraum 68 zwischen den Rippen 66 und 67 des Dichtkörpers 10. Zwecks Vereinfachung des Dichtrings 10 kann man eine der Rippen, nämlich die dem Gegenflansch 3 zugewendete Rippe 66 weglassen.

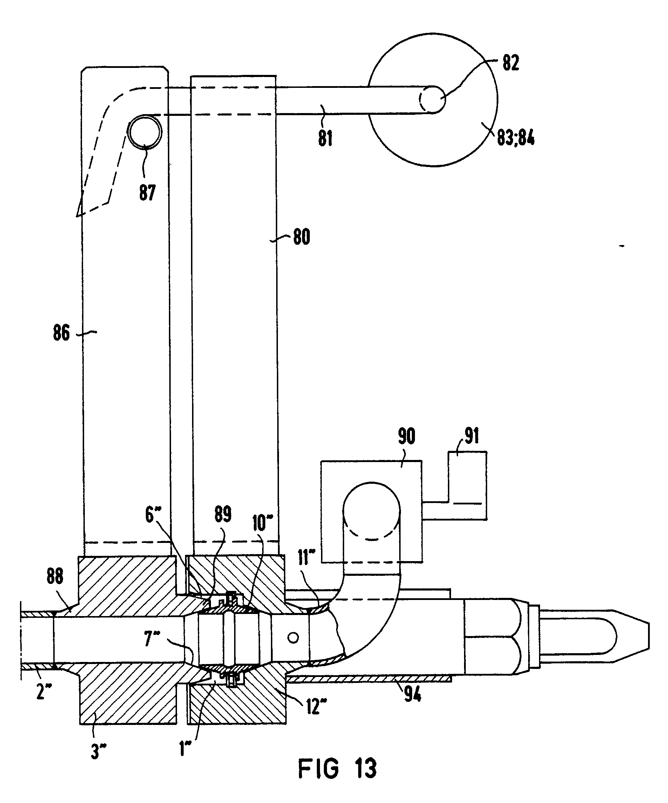

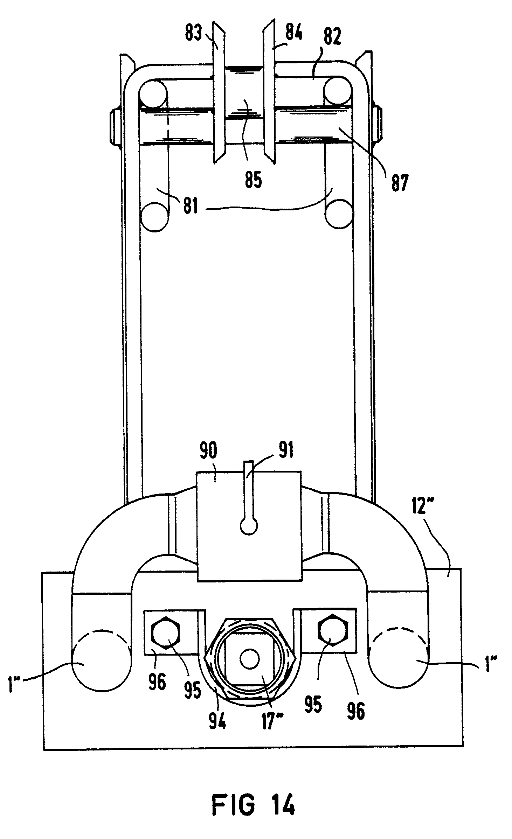

In den Figuren 13 und 14 ist eine Ausführungsform dargestellt, bei der der lose Flansch 12″ über einen U-förmigen Bügel 80 mit einem Hakenpaar 81 verbunden ist. Die Haken sind mit einem gemeinsamen Steg 82 versehen, an dem zwei Scheiben 83 und 84 einen Angriffspunkt 85 für einen Greifer bestimmen. Die Haken 81 greifen über ein Stützrohr 87, das mit zwei Trägern 86 an dem Festflansch 3″ befestigt ist.

Der Festflansch 3″ umfaßt zwei Rohrverbindungen 1″ mit den Rohrenden 2″ auf der einen Seite. Die Rohrenden 2″ sind an einen Stutzen 88 des Festflansches 3″ angeschweißt. Auf der Gegenseite bildet der Festflansch 3″ mit einem dem Bund 5 entsprechenden Vorsprung 89 mit dem Außenkonus 6″ eine Zentriermöglichkeit für den Loseflansch 12″. Der Innenkonus 7″ ergibt die Anlagefläche für den Dichtkörper 10″.

Die anderen Rohrenden 11″ führen zu einem Kugelhahn 90, der mit einem Hebel 91 zwischen den Stellungen auf und zu betätigt werden kann. Der Kugelhahn 90 ist nach dem Lösen der Schraube 17″ auswechselbar.

Die Befestigungsschraube 17″ ist bei diesem Ausführungsbeispiel nach den Figuren 13 und 14 mit einer Schale 94 unterstützt, die mit Schrauben 95 und Flanschen 96 an dem Loseflansch 12″ befestigt ist. Mit der Schale 94 wird die Schraube 17″ gehalten, so daß sie nach dem Lösen auch bei Schwenkbewegungen, die um die Haltestange 87 als Drehpunkt ausgeübt werden können, nicht die für das Einfädeln in den Festflansch 3″ günstige horizontale Lage verliert.

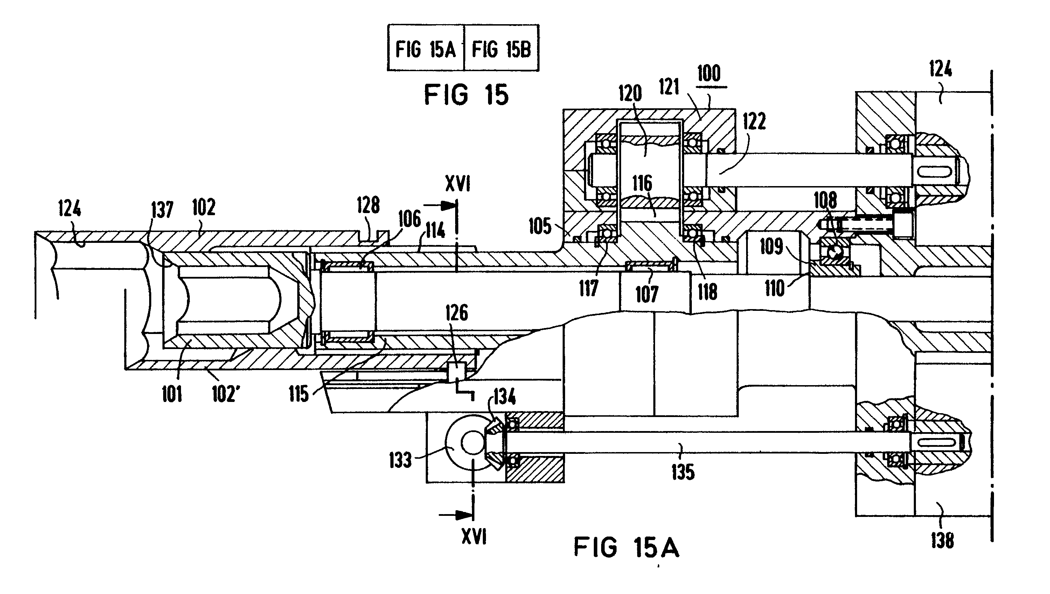

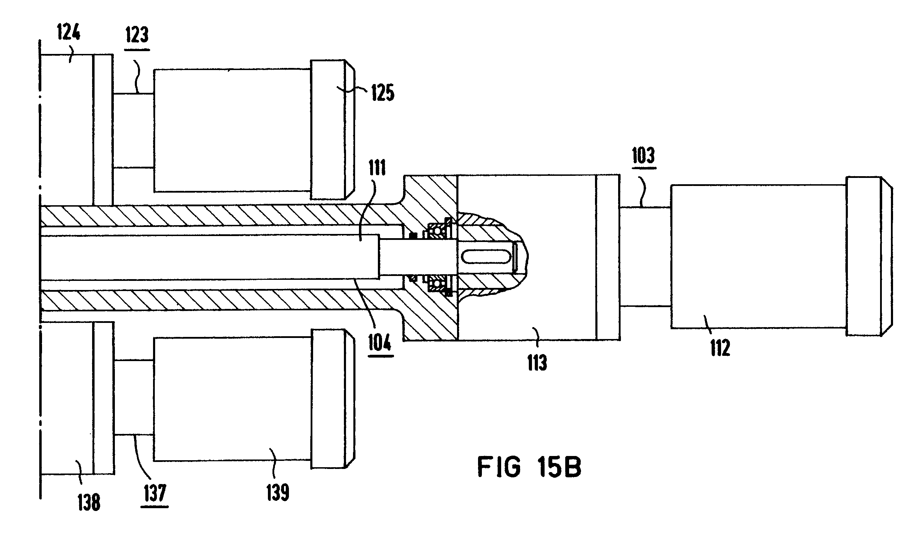

Das in den Figuren 15 bis 18 dargestellte Kombinationswerkzeug 100 umfaßt als Schraubenschlüssel eine an der Schraube 17 angreifende Schraubenhülse 101 (4-Kant-Nuß) und eine der Hülse 25 zugeordnete, konzentrisch zur Hülse 101 sitzende Mutternhülse 102 (6-Kant-Nuß). Die Schraubenhülse 101 ist direkt mit einer Welle 104 verbunden, die in dem Gehäuse 105 des Werkzeuges 100 mit einem Nadellager 106 am einen Ende und 107 am anderen Ende gelagert ist. Zur axialen Festlegung dient ein Kugellager 108, das mit einem Führungskörper 109 an einem Bund 110 der Welle 104 anliegt. An dem aus dem Gehäuse 105 ragenden Wellenende 111 greift ein Drehwerk 103 an, das aus einem Drehstrom-Asynchron-Motor 112 und einem Getriebe 113 besteht. Der Motor 112 ist umsteuerbar für Rechts-und Linkslauf.

Die Mutternhülse 102 sitzt mit einer Gleitkeilverbindung 114 auf einer Hohlwelle 115, die die Welle 104 konzentrisch umgibt. Die Hohlwelle 115 trägt an ihrem der Mutternhülse 102 abgekehrten Ende eine Außenverzahnung 116. Dort ist die Hohlwelle 115 über zwei Rollenlager 117 und 118 in dem Gehäuse 105 abgestützt. In die Verzahnung 116 greift ein Ritzel 120, das in einer um 90° versetzt gezeichneten Erweiterung 121 des Gehäuses 105 gelagert ist. Die Ritzelwelle 122 führt zu einem Drehwerk 123 zum Drehen der Mutternhülse 102. Das Drehwerk 123 umfaßt ebenfalls ein Getriebe 124 und einen Drehstrom-Asynchron-Motor 125 mit Rechts- und Linkslauf, so daß die Mutternhülse 102 in beiden Richtungen gedreht werden kann.

Die Mutternhülse 102 hat an ihrem den Innensechskant 124 abgekehrten Ende auf der Außenseite eine Nut 128. In diese greift, wie in den Figuren 15, 16 und 17 zu sehen ist, ein Stift 126, der an einem im Gehäuse 105 geführten Schlitten 130 befestigt ist. Der Schlitten 130 trägt an seiner Unterseite eine Verzahnung 129, die mit einem Ritzel 131 kämmt. Das Ritzel 131 ist über ein Wellenstück 132 mit einem Kegelrad 133 verbunden. Mit diesem kämmt, wie in FIG 15 zu sehen ist, ein Kegelrad 134, dessen Antriebswelle 135 aus dem Gehäuse 105 führt.

Die Antriebswelle 135 führt zu einem dritten Drehwerk 137 mit einem Getriebe 138 und einem umsteuerbaren Elektromotor 139, mit dem die Mutternhülse 102 in Richtung der Antriebswelle 104 verstellt werden kann. In FIG 15 ist oben die am weitesten ausgefahrene Stellung der Mutternhülse 102 dargestellt. In dieser Stellung kann sie die Hülse 25 umfassen. Auf der Unterseite der FIG 15 ist die zurückgezogene Stellung bei 102′ gezeichnet. Hier bildet die Mutternhülse 102 eine trichterförmige Verlängerung der konischen Aufweitung 137 der Schraubenhülse 101, so daß das Aufsetzen des Werkzeugs 100 auf die Schraube 17 erleichtert ist.

Nicht weiter dargestellt ist die Möglichkeit, die Mutternhülse 102, wie beschrieben, motorisch zurückzuziehen, sie aber mit Hilfe einer mäßig starken Feder vorzuschieben, so daß sie beim langsamen Drehen ohne Zwang nach vorne schnappt, sobald die Mutternhülse 102 die passende Drehstellung relativ zur 6-Kant-Hülse 25 erreicht hat.

Im Gegensatz zu der in FIG 15 gezeichneten Lösung kann man ein Getriebe mit einem Übersetzungsverhältnis von beispielsweise i = 1:80 auch so anordnen, daß es mit der Antriebswelle 111 rotiert und auf die Hohlwelle 115 wirkt. Das zum Spannen der Dehnschraube 17 benötigte große Drehmoment von beispielsweise 800 Nm wirkt dann direkt zwischen der Schraubenhülse 101 (4-Kant-Nuß) und der Mutternhülse 102 (6-Kant-Nuß), so daß keine größeren Drehmomente vom Gehäuse 105 her ins Werkzeug 100 oder in den ortsfesten Flansch 3 übergeleitet werden müssen.

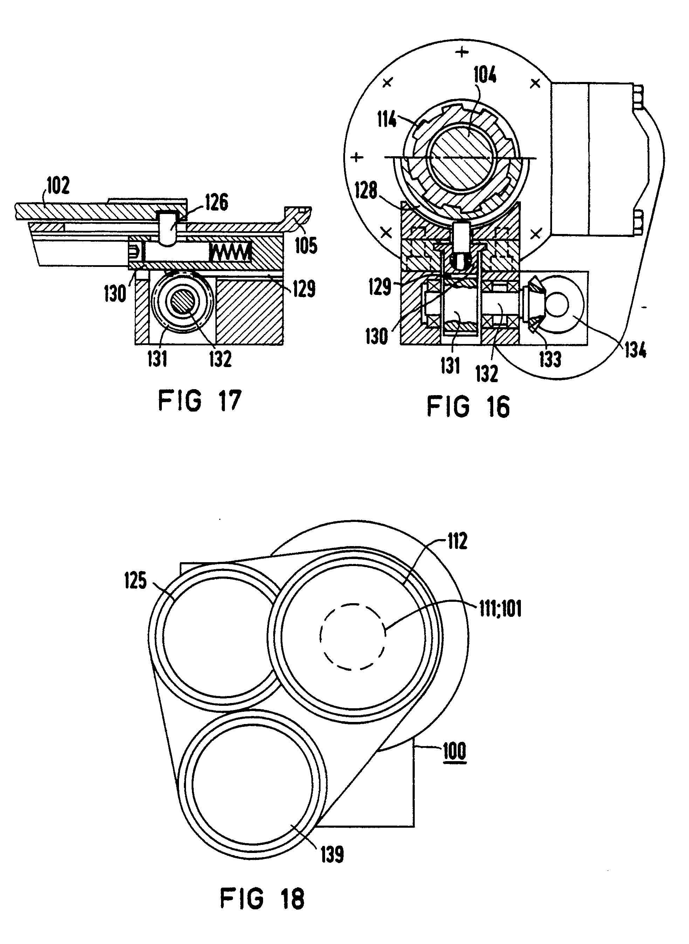

In FIG 18 ist sichtbar, daß das Kombinationswerkzeug 100 unsymmetrisch aufgebaut ist, indem die Motoren 125 und 139 einseitig (links) neben der Mitte der Welle 111 der Schraubenhülse 101 angeordnet sind. Hierdurch ergibt sich einseitig (rechts) ein verringertes Anfahrmaß an die um eine Rohrleitung angeordneten Flansch-Schrauben.

**Patentansprüche**

1.     Fernbedient lösbare Rohrverbindung, insbesondere für kerntechnische Anlagen, mit zwei Rohrenden, die jedes einen Flansch aufweisen, mit einer Zentrierhilfe, die mit den beiden Flanschen zusammenwirkt, mit einer Dichtung und mit einer Befestigungsschraube zum Zusammenpressen der beiden Flansche, **dadurch gekennzeichnet,** daß die Befestigungsschraube (17) zwei Gewindebereiche (46, 52) hat, die beim Zusammenpressen nacheinander wirksam werden, wobei der erste Gewindebereich (52) eine wesentlich größere Steigung als der zweite Gewindebereich (46) hat.

2. Rohrverbindung nach Anspruch 1, **dadurch gekennzeichnet,** daß das erste Gewinde (52) ein Grobgewinde mit mindestens der doppelten Steigung im Vergleich zum zweiten Gewinde (46) der Befestigungsschraube (17) ist.

3. Rohrverbindung nach Anspruch 1 oder 2, **dadurch gekennzeichnet,** daß die beiden Gewinde (46, 52) entgegengesetzte Steigungsrichtungen haben.

4. Rohrverbindung nach Anspruch 2 oder 3, **dadurch gekennzeichnet,** daß das Grobgewinde (52) ein axiales Gewindespiel (S) zum Gegenflansch (3) von mindestens 0,5 mm, vorzugsweise 2 mm hat.

5. Rohrverbindung nach einem der Ansprüche 2 bis 4, **dadurch gekennzeichnet,** daß das Grobgewinde (52) gerollt ist.

6. Rohrverbindung nach einem der Ansprüche 1 bis 5, **dadurch gekennzeichnet,** daß der Schaftteil zwischen den beiden Gewinden (46, 52) als Dehnschaft (48) ausgebildet ist.

7. Rohrverbindung nach Anspruch 6, **dadurch gekennzeichnet,** daß der Dehnschaft (48) auf einem Teilbereich (50) nahe dem Feingewinde (46) zwecks Zentrierung der Schraube (17) im Flansch (12) verdickt ist.

8. Rohrverbindung nach einem der Ansprüche 1 bis 7, **dadurch gekennzeichnet,** daß das erste Gewinde (52) in eine Gewindebohrung (16) in dem einen Flansch (3) und das zweite Gewinde (46) in eine Gewindebohrung (26) einer Hülse (25) eingreift, die sich an dem anderen Flansch (12) abstützt.

9. Rohrverbindung nach Anspruch 8, **dadurch gekennzeichnet,** daß die Schraubbewegung der Hülse (25) auf dem Feingewinde (46) in der Richtung weg vom Grobgewinde (52) durch einen festen Anschlag (44) begrenzt ist.

10. Rohrverbindung nach Anspruch 8, **dadurch gekennzeichnet,** daß die Hülse (25) ein doppeltes Innengewinde (26) hat, das sowohl über das Feingewinde (46) als auch über das Grobgewinde (52) geschraubt werden kann.

11. Rohrverbindung nach einem der Ansprüche 8 bis 10, **dadurch gekennzeichnet,** daß die Hülse (25) und die Schraube (17) Flachkanten (40, 59) unterschiedlicher Abmessungen zum Ansetzen von Werkzeugen (100) aufweisen.

12. Rohrverbindung nach Anspruch 11, **dadurch gekennzeichnet,** daß die Kantenzahl der Hülse (25) größer als die Kantenzahl der Schraube (17) ist, insbesondere in der Form Sechskant/Vierkant (59, 40).

13. Rohrverbindung nach Anspruch 6 und 11 oder 12, **dadurch gekennzeichnet,** daß der Flachkant (40) der Schraube (17) eine Schlüsselweite hat, die um mindestens 2 mm größer ist als der Durchmesser des Dehnschaftes (48), und daß im Zentrum des Flachkants (40) eine Sacklochbohrung (43) vorgesehen ist.

14. Rohrverbindung nach einem der Ansprüche 1 bis 13, **dadurch gekennzeichnet,** daß in dem lösbaren Flansch (12) eine kurze Länge mit grobem Innengewinde (21) versehen ist, das die Schraube (17) am Herausfallen beim Transport des Flansches (12) hindert.

15. Rohrverbindung nach Anspruch 1 bis 13, **dadurch gekennzeichnet,** daß der lösbare der beiden Flansche einen Innenbund aufweist, gegen den ein geschlitzter Ring mit Keilquerschnitt als Rückanschlag für die Befestigungsschraube (17) wirkt.

16. Rohrverbindung nach einem der Ansprüche 1 bis 15, **dadurch gekennzeichnet,** daß mindestens einer der Flansche (3, 12) mit Vorsprüngen (31) am Rand versehen ist, über die eine die notwendige Dichtkraft überschießende Schraubenvorspannkraft übertragen wird.

17. Rohrverbindung nach einem der Ansprüche 1 bis 16, **dadurch gekennzeichnet,** daß die Dichtung ein Rohrstück (10) mit gewölbten Dichtungsflächen ist, das einen Radialversatz ausgleicht.

18. Rohrverbindung nach einem der Ansprüche 1 bis 17, **dadurch gekennzeichnet,** daß die Dichtung eine Doppelkonusdichtung (10) aus Metall ist.

19. Rohrverbindung nach einem der Ansprüche 1 bis 18, **dadurch gekennzeichnet,** daß die Dichtung (10) mit einem Sicherungsring (60) an einem der Flansche (3, 12) festgelegt ist.

20. Rohrverbindung nach einem der Ansprüche 1 bis 19, **dadurch gekennzeichnet,** daß die Dichtung (10) in einem Flansch (12) versenkt angeordnet ist.

21. Rohrverbindung nach einem der Ansprüche 1 bis 20, **dadurch gekennzeichnet,** daß an dem ortsfesten Rohrende (2) eine vorspringende Dichtpartie (6) vorgesehen ist.

22. Rohrverbindung nach Anspruch 21, **dadurch gekennzeichnet,** daß die Dichtpartie (6) zur Zentrierung dient.

23. Rohrverbindung nach einem der Ansprüche 21 oder 22, **dadurch gekennzeichnet,** daß die Dichtpartie ein auswechselbarer Ring oder eine auswechselbare Buchse ist.

24. Rohrverbindung nach einem der Ansprüche 1 bis 23, **dadurch gekennzeichnet,** daß die Rohrverbindung (1) auf jeder der beiden Seiten einer Armatur (90) vorgesehen ist und daß eine Pendelaufhängung (81, 87) oberhalb der Rohrverbindung (1) angreift.

25. Rohrverbindung nach Anspruch 24, **dadurch gekennzeichnet,** daß die beiden Rohrverbindungen (1) eine gemeinsame, zwischen ihnen angeordnete Schraube (17″) haben.

26. Rohrverbindung nach einem der Ansprüche 1 bis 23, **dadurch gekennzeichnet,** daß mehrere Rohrverbindungen (1) mit einem gemeinsamen Flansch (3, 12) versehen sind und daß die Schraube (17) zwischen den Rohrachsen angeordnet ist.

27. Rohrverbindung für ein einzelnes Rohr nach einem der Ansprüche 1 bis 23, **dadurch gekennzeichnet,** daß die Schraube (17) asymmetrisch zur Rohrachse angeordnet ist.

28. Rohrverbindung nach einem der Ansprüche 1 bis 27, **dadurch gekennzeichnet,** daß ein Flansch (12) mit verringerter Breite (z.B. Rechteckflansch) in Richtung quer zur Ebene eines abgehenden Rohrbogens (11) vorgesehen ist.

29. Rohrverbindung nach einem der Ansprüche 1 bis 26, **dadurch gekennzeichnet,** daß von einem Mehrfachflansch (12) mehrere abgehende Rohre (11) in einer Ebene zusammengeführt und mit einer gemeinsamen Anhängelasche verbunden sind.

30. Rohrverbindung nach einem der Ansprüche 8 bis 29, **dadurch gekennzeichnet,** daß die Schraube (17) aus einem anderen Werkstofftyp als Flansche (3) und Hülse (25) besteht und daß auf die Hülse (25) eine Freßschutzkappe aus Schraubenwerkstoff aufgesetzt, vorzugsweise aufgeschrumpft ist.

31. Kombinationswerkzeug zum Bedienen der Rohrverbindung nach Anspruch 8, dadurch gekennzeichnet, daß ein erstes Drehwerk (103) für das Grobgewinde (52) zum gemeinsamen Drehen der Schraube (17) und der Hülse (25) vorgesehen ist, daß ein zweites Drehwerk (123) für das Drehen der Hülse (25) allein vorgesehen ist, daß das zweite Drehwerk (123) sich beim Drehen der Hülse (25) auf der Schraube (17) abstützt und daß das erste Drehwerk (103) und das zweite Drehwerk (123) sich in bzw. an einem gemeinsamen Gehäuse (105) des Werkzeuges (100) befinden und die jeweilige Drehbewegung durch eine Schraubenhülse (101) bzw. Mutterhülse (102), welche konzentrisch angeordnet sind, übertragen.

32. Kombinationswerkzeug nach Anspruch 31, **dadurch gekennzeichnet,** daß mit einer Instrumentierung der Drehwerke (103, 123) die Umdrehungszahl oder die Laufzeit und das Drehmoment, vorzugsweise durch Wirkleistungsmessung bei einem Drehstrom-Asynchronmotor (112, 125) ermittelt werden.

33. Kombinationswerkzeug nach Anspruch 31 oder 32, **dadurch gekennzeichnet,** daß ein Schlagschraubereffekt im ersten Drehwerk (103) in Richtung Lösen des Grobgewindes (52) vorgesehen ist, der bei Überschreiten eines einstellbaren Normaldrehmoments wirksam wird.

34. Kombinationswerkzeug nach einem der Ansprüche 31 bis 33, **dadurch gekennzeichnet,** daß das mögliche Drehmoment, insbesondere durch Strombegrenzung im Asynchronmotor (112, 125), und gegebenenfalls die Drehzahl der Drehwerke (103, 123) abgestuft einstellbar ist.

35. Kombinationswerkzeug nach einem der Ansprüche 31 bis 34, **dadurch gekennzeichnet,** daß ein Schlüssel (102) für die Hülse (25) relativ zum Schlüssel (101) für die Schraube (17) axial verstellbar ist.

36. Kombinationswerkzeug nach einem der Ansprüche 31 bis 35, **dadurch gekennzeichnet,** daß eine programmierte Schrittfolgesteuerung vorgesehen ist, die beim vorzeitigen Ansteigen eines Drehmoments die Drehwerke (103, 123) stillsetzt und ein Signal gibt.

37. Kombinationswerkzeug nach einem der Ansprüche 31 bis 36, **gekennzeichnet** durch eine einseitig zur Schrauben-Achse wesentlich kleinere Radialabmessung als auf der Gegenseite.

## Claims

1. A remote-controlledly releasable tube connection, in particular for nuclear installations, comprising two tube ends which each have a flange, a centering aid which cooperates with the two flanges, a seal and a fixing screw for pressing the two flanges together, characterised in that the fixing screw (17) has two screwthread regions (46, 52) which become operative successively when the two flanges are pressed together, wherein the first screwthread region (52) has a substantially greater pitch than the second screwthread region (46).

2. A tube connection according to claim 1 characterised in that the first screwthread (52) is a coarse screwthread with at least double the pitch in comparison with the second screwthread (46) of the fixing screw (17).

3. A tube connection according to claim 1 or claim 2 characterised in that the two screwthreads (46, 52) have opposite pitch directions.

4. A tube connection according to claim 2 or claim 3 characterised in that the coarse screwthread (52) has an axial screwthread clearance (S) relative to the co-operating flange (3) of at least 0.5 mm, preferably 2 mm.

5. A tube connection according to one of claims 2 to 4 characterised in that the coarse screwthread (52) is rolled.

6. A tube connection according to one of claims 1 to 5 characterised in that the shank portion between the two screwthreads (46, 52) is in the form of a necked shank (48).

7. A tube connection according to claim 6 characterised in that the necked shank (48) is thickened on a portion (50) adjacent the fine screwthread (46) for the purposes of centering of the screw (17) in the flange (12).

8. A tube connection according to one of claims 1 to 7 characterised in that the first screwthread (52) engages into a screwthread bore (16) in the one flange (3) the second screwthread (46) engages into a screwthread bore (26) in a sleeve (25) which bears against the other flange (12).

9. A tube connection according to claim 8 characterised in that the screwing movement of the sleeve (25) on the fine screwthread (46) in the direction away from the coarse screwthread (52) is limited by a fixed abutment (44).

10. A tube connection according to claim 8 characterised in that the sleeve (25) has a double internal screwthread (26) which can be screwed both over the fine screwthread (46) and also over the coarse screwthread (52).

11. A tube connection according to one of claims 8 to 10 characterised in that the sleeve (25) and the screw (17) have flats (40, 59) of different dimensions for fitting tools (100) thereto.

12. A tube connection according to claim 11 characterised in that the number of flats of the sleeve (25) is greater than the number of flats of the screw (17), in particular in the form of a hexagon/square (59, 40).

13. A tube connection according to claim 6 and clam 11 or claim 12 characterised in that the flat portion (40) of the screw (17) is of a wrench size which is at least 2 mm larger than the diameter of the necked shank (48) and that a blind bore (43) is provided in the centre of the flat portion (40).

14. A tube connection according to one of claims 1 to 11 characterised In that provided in the releasable flange (12) is a short length with a coarse internal screwthread (21) which prevents the screw (17) from falling out upon transportation of the flange (12).

15. A tube connection according to claim 1 to 11 characterised in that the releasable one of the two flanges has an internal shoulder against which a slotted ring of wedge-like cross-section acts as a reverse abutment for the fixing screw (17).

16. A tube connection according to one of claims 1 to 15 characterised in that at least one of the flanges (3, 12) is provided at the edge with projections (31) by way of which a screw prestressing force which exceeds the necessary sealing force is transmitted.

17. A tube connection according to one of claims 1 to 16 characterised in that the seal is a tube portion (10) with curved sealing surfaces, which compensates for radial displacement.

18. A tube connection according to one of claims 1 to 17 characterised in that the seal is a double-cone seal (10) of metal.

19. A tube connection according to one of claims 1 to 18 characterised in that the seal (10) is fixed with a securing ring (60) to one of the flanges (3, 12).

20. A tube connection according to one of claims 1 to 19 characterised in that the seal (10) is arranged in sunk relationship in a flange (12).

21. A tube connection according to one of clams 1 to 20 characterised in that a projecting sealing portion (6) is provided at the feed tube end (2).

22. A tube connection according to claim 21 characterised in that the sealing portion (6) serves for centering purposes.

23. A tube connection according to one of claims 21 and 22 characterised in that the sealing portion is a replaceable ring or a replaceable bush.

24. A tube connection according to one of claims 1 to 23 characterised in that the tube connection (1) is provided on each of the two sides of a valve fitting (90) and that a pendulum suspension arrangement (81, 87) is operatively disposed above the tube connection (1).

25. A tube connection according to claim 24 characterised in that the two tube connections (1) have a common screw (17") which is arranged between them.

26. A tube connection according to one of claims 1 to 23 characterised in that a plurality of tube connections (1) are provided with a common flange (3, 12) and that the screw (17) is disposed between the tube axes.

27. A tube connection for a single tube according to one of claims 1 to 23 characterised in that the screw (17) is disposed asymmetrically relative to the tube axis.

28. A tube connection according to one of claims 1 to 27 characterized in that there is provided a flange (12) of reduced width (for example a rectangular flange) in a direction transversely relative to the plane of an outgoing tube bend (11).

29. A tube connection according to one of claims 1 to 26 characterised in that from a multiple flange (12) a plurality of outgoing tubes (11) are brought together in a plane and connected to a common attachment plate.

30. A tube connection according to one of claims 8 to 29 characterised in that the screw (17) comprises a different type of material from the flange (3) and the sleeve (25) and that a corrosion-resistant cap of screw material is fitted, preferably shrunk, on to the sleeve (25).

31. A combination tool for operation of the tube connection according to claim 8 characterised in that there is provided a first rotating mechanism (103) for the coarse thread (52) for jointly rotating the screw (17) and the sleeve (25), that there is provided a second rotating mechanism (123) for rotating the sleeve (25) alone, that the second rotating mechanism (123) bears against the screw (17) when the sleeve (25) is rotated and that the first rotating mechanism (103) and the second rotating mechanism (123) are disposed in or on a common housing (105) of the tool (100) and transmit the respective rotary movement by a screw sleeve (101) and a nut sleeve (102) respectively, which are arranged concentrically.

32. A combination tool according to claim 31 characterised in that the number of revolutions or the operating time and the torque are ascertained with instrumentation of the rotating mechanisms (103, 123), preferably by active power measurement in the case of a three-phase current asynchronous motor (112, 125).

33. A combination tool according to claim 31 or claim 32 characterised in that there is provided an impact screw driver effect in the first rotating mechanism (103) in the direction of release of the coarse screwthread (52), which comes into operation when an adjustable normal torque is exceeded.

34. A combination tool according to one of claims 31 to 33 characterised in that the possible torque is adjustable in a stepped fashion, in particular by current limitation in the asynchronous motor (112, 125), and possibly also as regards the speed of rotation of the rotating mechanisms (103, 123).

**35.** A combination tool according to one of claims 31 to 34 characterised in that a wrench (102) for the sleeve (25) is axially displaceable relative to the wrench (101) for the screw (17).

**36.** A combination tool according to one of claims 31 to 35 characterised in that there is provided a programmed step sequence control which, upon premature rise in a torque, stops the rotating mechanisms (103, 123) and gives a signal.

**37.** A combination tool according to one of claims 31 to 36 characterised by a radial dimension which is substantially smaller on one side relative to the screw axis, than on the other side.

**Revendications**

**1.** Raccord de tuyau démontable par télécommande, notamment pour des installations de génie nucléaire, comprenant deux extrémités de tuyau, qui comportent chacune une bride, des moyens auxiliaires de centrage qui coopèrent avec les deux brides, un dispositif d'étanchéité et une vis de fixation destinée à presser les deux brides l'une contre l'autre, caractérisé en ce que la vis de fixation (17) a deux tronçons filetés (46, 52), qui entrent en action l'un après l'autre lorsque les deux brides sont pressées l'une contre l'autre, le premier tronçon fileté (52) ayant un pas sensiblement plus grand que le second tronçon fileté (46).

**2.** Raccord de tuyau suivant la revendication 1, caractérisé en ce que le premier filetage (52) a un filetage grossier ayant un pas au moins deux fois plus grand que le second filetage (46) de la vis de fixation (17).

**3.** Raccord de tuyau suivant la revendication 1 ou 2, caractérisé en ce que les deux filetages (46, 52) ont des pas de sens inverse.

**4.** Raccord de tuyau suivant la revendication 2 ou 3, caractérisé en ce que le filetage grossier (52) a un jeu de filetage (S) axial par rapport à la contre-bride (3), d'au moins 0,5 mm et, de préférence, d'au moins 2 mm.

**5.** Raccord de tuyau suivant l'une des revendications 2 à 4, caractérisé en ce que le filetage grossier (52) est enroulé.

**6.** Raccord de tuyau suivant l'une des revendications 1 à 5, caractérisé en ce que la partie de tige comprise entre les deux filetages (46, 52) est constituée sous la forme d'une tige allégée (48).

**7.** Raccord de tuyau suivant la revendication 6, caractérisé en ce que la tige allégée (48) est épaissie sur un tronçon partiel (50) à proximité du filetage fin (46), en vue du centrage de la vis (17) dans la bride (12).

**8.** Raccord de tuyau suivant l'une des revendications 1 à 7, caractérisé en ce que le premier filetage (52) se visse dans un trou taraudé (16) de l'une des brides (3) et le second filetage (46) se visse dans un trou taraudé (26) d'une douille (25) qui s'appuie sur l'autre bride (12).

**9.** Raccord de tuyau suivant la revendication 8, caractérisé en ce que le vissage de la douille (25) sur le filetage fin (46) est limité dans le sens s'éloignant du filetage grossier (52) par une butée (44) fixe.

**10.** Raccord de tuyau suivant la revendication 8, caractérisé en ce que la douille (25) a un double taraudage (26) qui peut se visser aussi bien sur le filetage mince (46) que sur le filetage grossier (52).

**11.** Raccord de tuyau suivant l'une des revendications 8 à 10, caractérisé en ce que la douille (25) et la vis (17) présentent des pans (40, 59) de dimension différente pour la mise en place d'outils (100).

**12.** Raccord de tuyau suivant la revendication 11, caractérisé en ce que le nombre de pans de la douille (25) est supérieur au nombre de pans de la vis (17), notamment sous la forme d'un six-pans/quatre-pans (59,40).

**13.** Raccord de tuyau suivant la revendication 6 et 11 ou 12, caractérisé en ce que le pan (40) de la vis (17) a un surplat qui est supérieur d'au moins 2 mm au diamètre de la tige allégée (48), et en ce qu'il est prévu un trou borgne (43) au centre du pan (40).

**14.** Raccord de tuyau suivant l'une des revendications 1 à 13, caractérisé en ce qu'il est prévu, dans la bride (12) amovible, un court tronçon ayant un taraudage (21) grossier qui empêche la vis (17) de tomber lors du transport de la bride (12).

**15.** Raccord de tuyau suivant l'une des revendications 1 à 13, caractérisé en ce que celle des deux brides qui est amovible comporte un épaulement intérieur sur lequel une bague fendue de section transversale cunéiforme agit en tant que butée arrière pour la vis de fixation (17).

16. Raccord de tuyau suivant l'une des revendications 1 à 15, caractérisé en ce qu'au moins l'une des brides (3, 12) est munie, sur le bord, de saillies (31) par lesquelles est transmise une force de précontrainte de vissage dépassant la force d'étanchéité qui est nécessaire.

17. Raccord de tuyau suivant l'une des revendications 1 à 16, caractérisé en ce que le dispositif d'étanchéité est une pièce tubulaire (10) à surface d'étanchéité arquée, qui compense un décalage radial.

18. Raccord de tuyau suivant l'une des revendications 1 à 17, caractérisé en ce que le dispositif d'étanchéité est un dispositif d'étanchéité à double cône (10) en métal.

19. Raccord de tuyau suivant l'une des revendications 1 à 18, caractérisé en ce que le dispositif d'étanchéité (10) est fixé par un jonc élastique (60) à l'une des brides (3, 12).

20. Raccord de tuyau suivant l'une des revendications 1 à 19, caractérisé en ce que le dispositif d'étanchéité (10) est noyé dans une bride (12).

21. Raccord de tuyau suivant l'une des revendications 1 à 20, caractérisé en ce qu'il est prévu une partie d'étanchéité (6) en saillie à l'extrémité du tuyau (2) qui est fixe.

22. Raccord de tuyau suivant la revendication 21, caractérisé en ce que la partie d'étanchéité (6) sert au centrage.

23. Raccord de tuyau suivant l'une des revendications 21 ou 22, caractérisé en ce que la partie d'étanchéité est un anneau remplaçable ou une douille remplaçable.

24. Raccord de tuyau suivant l'une des revendications 1 à 23, caractérisé en ce que le raccord de tuyau (1) est prévu des deux côtés d'un robinet (90), et en ce qu'une suspension pendulaire (81, 87) est prévue au-dessus du raccord de tuyau (1).

25. Raccord de tuyau suivant la revendication 24, caractérisé en ce que les deux raccords de tuyau (1) ont une vis (17") commune disposée entre eux.

26. Raccord de tuyau suivant l'une des revendications 1 à 23, caractérisé en ce que plusieurs raccords de tuyau (1) sont munis d'une bride (3, 12) commune, et en ce que la vis (17) est disposée entre les axes des tuyaux.

27. Raccord de tuyau pour un tuyau individuel suivant l'une des revendications 1 à 23, caractérisé en ce que la vis (17) est disposée dissymétriquement par rapport à l'axe du tuyau.

28. Raccord de tuyau suivant l'une des revendications 1 à 27, caractérisé en ce qu'il est prévu une bride de moindre largeur (par exemple une bride rectangulaire) dans la direction perpendiculaire au plan d'un coude de tuyau (11) partant.

29. Raccord de tuyau suivant l'une des revendications 1 à 26, caractérisé en ce qu'à partir d'une bride (12) multiple, plusieurs tuyaux (11) partant sont réunis dans un plan et sont reliés à un collier commun de suspension.

30. Raccord de tuyau suivant l'une des revendications 8 à 29, caractérisé en ce que la vis (17) est en un matériau d'un autre type que la bride (3) et la douille (25), et en ce que sur la douille (25) est posé, en étant de préférence fretté, un capot en le matériau de la vis destiné à protéger du grippage.

31. Outil universel destiné à télécommander le raccord de tuyau suivant la revendication 8, caractérisé en ce qu'il est prévu un premier dispositif de rotation (103) pour le filetage grossier (152) en vue de faire tourner ensemble la vis (17) et la douille (25), en ce qu'il est prévu un second dispositif de rotation (123) destiné à faire tourner la douille (25) seule, en ce que le second dispositif de rotation (123) s'appuie, lors de la rotation de la douille (25), sur la vis (17), et en ce que le premier dispositif de rotation (103) et le second dispositif de rotation (123) se trouvent dans ou sur un bâti (105) commun de l'outil (100) et transmettent le mouvement de rotation par une douille filetée (101) et par une douille en forme d'écrou (102) qui sont disposées concentriquement l'une à l'autre.

32. Outil universel suivant la revendication 31, caractérisé en ce que par une instrumentation des dispositifs de rotation (103, 123) la vitesse de rotation ou la durée de fonctionnement ou le couple sont déterminés de préférence en mesurant la puissance efficace dans le cas d'un moteur asynchrone (112, 125) à courant triphasé.

**33.** Outil universel suivant la revendication 31 ou 32, caractérisé en ce qu'il est prévu un effet de tournevis à frappe dans le premier dispositif de rotation (103) dans le sens du dévissage du filetage grossier (52), qui devient efficace après dépassement d'un couple normal réglable.

**34.** Outil universel suivant l'une des revendications 31 à 33, caractérisé en ce que le couple qui est possible peut être réglé par palier, notamment en limitant le courant du moteur (112, 125) et, le cas échéant, la vitesse de rotation des dispositifs de rotation (103, 123).

**35.** Outil universel suivant l'une des revendications 31 à 34, caractérisé en ce qu'une clé (102) pour la douille (125) peut être déplacée axialement par rapport à la clé (101) pour la vis (17).

**36.** Outil universel suivant l'une des revendications 31 à 35, caractérisé en ce qu'il est prévu une commande séquentielle pas-à-pas programmée qui arrête les dispositifs de rotation (103, 123) et émet un signal en cas d'augmentation prématurée d'un couple.

**37.** Outil universel suivant l'une des revendications 31 à 36, caractérisé par une dimension radiale sensiblement plus petite d'un côté de l'axe de la vis que du côté opposé.

FIG 1

EP 0 299 324 B1

FIG 2

FIG 3

EP 0 299 324 B1

FIG 4

FIG 5

EP 0 299 324 B1

FIG 6

FIG 7

20

FIG 9

FIG 8

FIG 10

FIG 11

FIG 12

FIG 13

FIG 14

FIG 15A

FIG 15

| FIG 15A | FIG 15B |

FIG 15B

FIG 17

FIG 16

FIG 18